# EUROPEAN PATENT SPECIFICATION

(11) **EP 1 712 404 B1**
(45) Date of publication and mention of the grant of the patent: **26.12.2007**
(21) Application number: 05008052.2
(22) Date of filing: 13.04.2005
(51) Int. Cl.: B60N 2/28, B60N 2/42

(54) **A child seat for a vehicle**
Ein Kindersitz für ein Fahrzeug.
Un siège enfant pour un véhicule.

(43) Date of publication of application: 18.10.2006
(73) Proprietor: Ford Global Technologies, LLC, Dearborn, MI 48126 (US)
(72) Inventor: Kvarnstrand, Laura A., 56691 Habo (SE)
(74) Representative: Hammond, Andrew David

(56) References cited:
- EP-A- 1 090 805
- EP-A- 1 380 464
- WO-A-00/48862
- DE-A1- 3 911 264

## Description

### FIELD OF THE INVENTION

The present invention relates to a child seat for a vehicle according to the preamble of claim 1.

### BACKGROUND OF THE INVENTION

The front passenger seat of a vehicle is often used to receive a child seat and a child therein. However, today's vehicles, such as cars, have a number of safety devices to thereby fulfil various safety regulations. For example, the front passenger seat of a car is often served with an airbag, Since a child seat cannot be arranged on such a seat, or at least the airbag has to be disconnected such that it does not inflate and cause injury to the child in the case the vehicle is involved in a traffic accident, the child seat is very often instead arranged in the backseat of the vehicle.

Furthermore, research has shown that children should sit in rearward-facing child seats as long as possible and preferably up to the age of 6 years in order to reduce their risk of injuries such as fatal spinal injuries.

Due to practical reasons related to limited space behind the seat, i.e. the driver's seat or the front passenger seat, from the age of 3 years, however, most children travel forward-facing in a child seat arranged in the backseat. A forward-facing child seat gives more space for the legs of the child.

For reasons of safety it would be desirable if children up to at least 5 years-old also could enjoy the added safety of sitting rearward-facing.

### SUMMARY OF THE INVENTION

An object of the invention is to provide a child seat of the kind referred to in the introduction, which child seat may enable children up to four or five or even six years old to sit rearward-facing in a vehicle. A further object of the invention is to provide a child seat which reduces the risk of the submarining effect when the child seat is either arranged for sitting rearward-facing or forwarding-facing.

Document DE-1-3911264 shows a child seat as disclosed in the preamble of claim 1.

These objects are achieved by a child seat according to claim 1.

By the provision of a child seat wherein a main extension direction of a main support surface of the thigh seat portion and a main extension direction of a main support surface of the backrest form a thigh seat portion to backrest angle which is in the interval 40 to 80°, and the main extension direction of the main support surface of the thigh seat portion and a horizontal geometrical line form a thigh seat portion angle which is in the interval 30 to 70°, a child seat which is very compact in the length direction (travel direction) can be obtained.

At the same time, due to the position of the thigh seat portion, the thighs of a child sitting in the seat are raised up towards the chest. This in turn prevents pelvis translation and rotation movement during a collision by restraining the pelvis in the depression formed between the thigh seat portion and the backrest, thereby reducing the submarining risk. Furthermore, the restraining load from the seat belt having abdominal focus is reduced by the fact that part of the load is instead taken up via the thighs and indirectly through the pelvis.

Thus, the child's leg position resulting from the design of the child seat according to the invention will increase safety, and at the same time decrease the requisite total base length of the child seat enabling the child seat to be used while requiring less space. Less space is required due to the fact that the child seat per se can be made shorter in the length direction, when the thigh seat portion and the backrest form an angle in the interval according to the invention. However, the largest space-saving effect is obtained by the leg position of the child which allows support for long legs while maintaining the extension in the length direction. In other words; the total base length In the horizontal direction determined by the child seat and a child occupying the seat requires less space. This in turn enables the child seat to be arranged in a rearward-facing position in the backseat of a car to accommodate a child also in the case the child is relatively tall.

In addition, the reduction of belt forces means that the requisite restraint means can work differently in comparison with such prior art devices. Since part of the load in the horizontal direction during a crash is taken up via the thighs, primarily only a downwardly directed force on the child's pelvis is required to keep the child in the desired position in the seat. According to a preferred embodiment of the invention, the child seat comprises a restraint means having a single strap for keeping a child in position in the child seat, the strap being substantially triangle-shaped for covering a large part of the torso of the child and provided with three corners, one first corner of which being connectable to the thigh seat portion in a position corresponding to a position between the legs of a child occupying the child seat, and the remaining second and third corners being connectable to the backrest in positions corresponding to positions in the vicinity of each shoulder of a child occupying the child seat. Hereby, the requisite downwardly directed force on the pelvis may be obtained, and at the same time the horizontal load on the upper part of the body which inevitably arises during a crash can be distributed over as large a surface as possible of the child's torso. In this connection, the conventional safety belt arranged in the vehicle is only used for keeping the child seat in position or not used at all if the child seat can be fixed to the vehicle by other means.

Further advantages and advantageous features of the child seat according to the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of the child seat according to the invention,
Fig. 1a is a lateral view of the child seat in figure 1 accommodating a child,
Fig. 2 is a schematic lateral view of a child seat according to the invention,
Fig. 3 is a schematic lateral view of a variant of the child seat in figure 2, and
Fig. 4 is a front view of a child seat according to the invention, wherein the child seat is provided with a restraint means to keep a child in position relative to the child seat.

### DETAILED DESCRIPTION OF PREFERRED EMBODIMENTS OF THE INVENTION

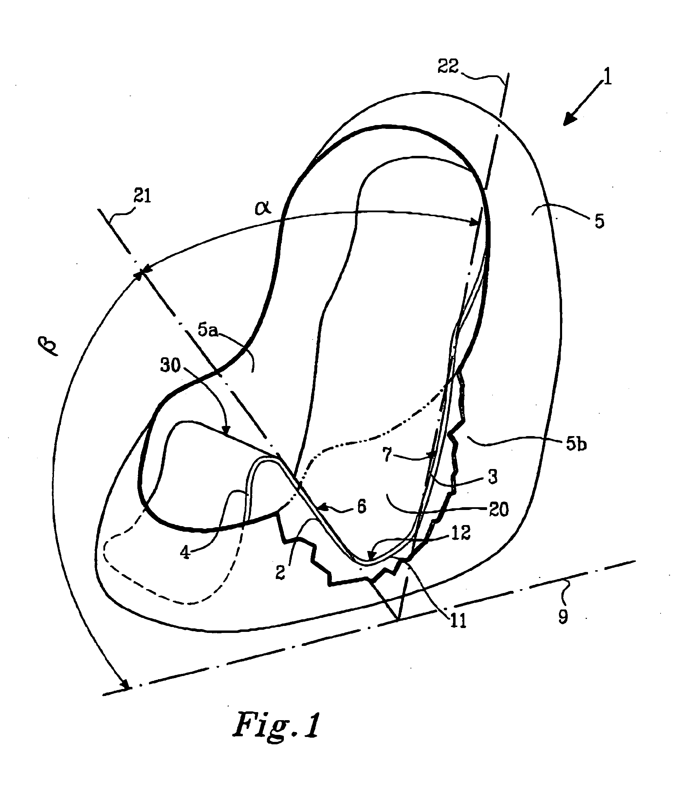

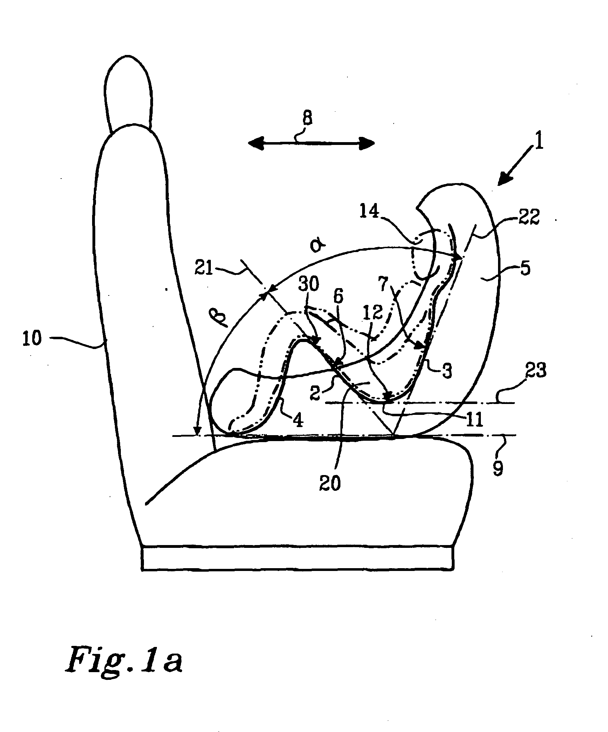

In figures 1 and 1a a child seat for a vehicle according to the invention is illustrated in a partly cut perspective view and a lateral view, respectively. The child seat comprises a seat portion 2 for supporting the underside of the thighs of an occupant of the seat, and a backrest 3 for supporting the back of the occupant. The child seat illustrated in figure 1 further comprises a seat portion 4 for supporting the lower legs, and an exterior portion 5 partly surrounding said portions. The exterior portion 5 may have a partly egg shell-shaped outer limit surface, forming also side walls 5a, 5b of the child seat.

As previously discussed in the summary herein, the child seat 1 has the advantage of enabling the seat to be used as a rearward-facing child seat arranged in the backseat of a car for instance. However, the child seat could also be arranged in a front passenger seat and/or could also be arranged to be used as a forward-facing child seat. Although not discussed in detail herein, various already known or future means, an ordinary safety belt for instance, may be used for restraining the child seat in the vehicle, provided that such means are able to keep the child seat in the desired position relative to the vehicle prior to and during a crash. Some embodiments of the child seat could also be adapted to use a safety belt as a restraint means for keeping a child in the child seat. In other embodiments of the child seat according to the invention, the child seat itself is provided with such a restraint means as further described below.

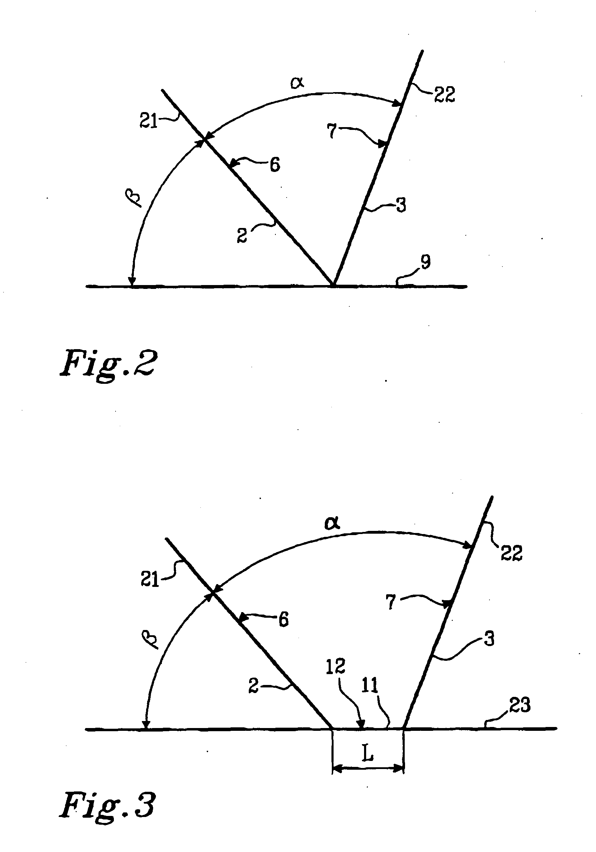

A main extension direction 21 of a main support surface 6 of the thigh seat portion 2 supporting the thighs and a main extension direction 22 of a main support surface 7 of the backrest 3 supporting the back, form a thigh seat portion to backrest angle α which is in the interval 40 to 80°. By "main support surface" is meant a surface constituting a substantial part of the thigh seat portion or the backrest acting as a support to an occupant of the seat. By "main extension direction" is meant the principal direction of such a support surface taken as a whole, not any possible different direction of a minor part of the support surface due to an irregular surface. The thigh seat portion to backrest angle is defined as the angle formed between these main extension directions 21, 22 of said surfaces when the child seat is viewed laterally, i.e. in a horizontal direction substantially perpendicular to the intended direction of travel 8 of a vehicle in which the child seat is arranged. At the same time, the main extension of the main support surface 21 of the thigh seat portion 2 and a horizontal geometrical line 9 parallel to the intended travel direction 8 form a thigh seat portion angle β which is in the interval 30 to 70° when the child seat is installed for use in a vehicle. The thigh seat portion angle β appears when the seat is viewed in the same mentioned lateral direction. This is also shown in figure 2.

Since the thigh seat portion to backrest angle α is in the interval 40 to 80°, and not larger than 90° as in prior art, and further the thigh seat portion angle β is in the interval 30 to 70°, this means that the thighs of an occupant are raised upwardly towards the chest. In addition to the fact that the interior angled seat contour of the child seat will raise the thighs of a child, the child's pelvis is held so that unwanted pelvic rotation and translation movement will be counteracted.

The child seat is preferably designed in a way such that the child seat more or less automatically adopts a position in which the intended thigh seat portion angle β is obtained. For example the underside portion of the child seat to be supported by, for example, a back seat 10 of a car, may be shaped and/or orientated relative to the thigh seat portion 2 so as to obtain the requisite thigh seat portion angle β when the child seat is arranged on the back seat 10. Preferably, the child seat has a support for releasably attachment of the child seat to a vehicle so as to obtain the desired thigh seat portion angle β when the child seat is installed for use in a vehicle. The underside of the child seat may be shaped and/or orientated relative to the thigh seat portion so as to obtain the requisite thigh seat portion angle when the child seat is positioned on a standard backseat. Furthermore, attachment means may be used for positioning the child seat so as to create the thigh seat portion angle according to the invention. The child seat and the vehicle, for example, the seat receiving the child seat, may have cooperating means for attachment of the child seat relative to the vehicle so as to ensure the child seat will be maintained in the intended position. An attachment means of the type having a quick fix or snap in coupling is preferred, thus enabling an easy removal of the child seat. Of course any removable or separate means, such as a wedge-shaped support to be put under the child seat, may also be used for positioning the child seat when being attached to the interior of a vehicle. Generally, the child seat can be attached to the backrest and/or seat portion of a passenger seat and/or to any other suitable component inside the vehicle, such as the ceiling for instance.

Furthermore, the child seat could also be designed such that the thigh seat portion to backrest angle α and/or the thigh seat portion angle 13 is adjustable within the desired angle intervals. This in turn makes the child seat even more adaptable to the space available in the vehicle. The safety aspects may be considered while utilising the current space in the vehicle in an optimal way, It is possible to design the child seat such that the angles (α and β) are dependent on each other. For example, the thigh seat portion could be designed to be adjustable relative to the backrest and to the geometrical horizontal plane, whereas the backrest position relative to the geometrical horizontal plane is fixed.

As appears from figures 1 and 3, in one embodiment of the invention the child seat comprises an additional seat portion 11 having a main support surface 12 with a main extension direction 23 different from the main extension directions 21, 22 of the main support surfaces 6, 7 of the thigh seat portion 2 and the backrest 3, when being viewed laterally. This additional seat portion 11 is arranged between the thigh seat portion 2 and the backrest 3 connecting the thigh seat portion and the backrest to each other. The main extension direction 23 of the additional portion 11 may be substantially horizontal, i.e. parallel to the intended travel direction 8. Preferably, this additional seat portion 11 may have a concave curve-shaped support surface 12. To obtain a comfortable seat together with the safety aspects, the thigh seat portion 2, the backrest 3 and the additional seat portion 11 may form a substantially cup-shaped depression 20 for receiving a child as Illustrated in figure 1a.

Experiments have shown that preferably the thigh seat portion to backrest angle α is In the interval 50 to 70°, and more preferably the thigh seat portion to backrest angle α is approximately 60°. The thigh seat portion angle β is preferably in the interval 40 to 60°, and more preferably the thigh seat portion angle β is approximately 50°. Furthermore, the additional seat portion 11 has advantageously a length L in the intended direction of travel 8 in the interval 5 to 20 cm. The length is preferably in the interval 10 to 15 cm, and more preferably the additional seat portion length L is approximately 12 cm.

It should be pointed out that the characteristics of the child seat according to the invention may be utilised during frontal crashes as well as in rear-impact crashes. Assume for example that the child travels rearward-facing and that the child's body moves in the direction of the front of the vehicle, during a first phase of a crash the neck and the back of the child will push against the backrest of the child seat. However, in a second phase of the crash, the rebound phase, the body of the child will rebound and move in the direction of the rear of the vehicle, then, forces that would otherwise be solely transferred by any restraint means, will instead be at least partly transferred via the underside of the thighs which push against the angled seat contour.

In a rear-impact crash, still assuming that the child travels rearward-facing, the seat characteristic will probably offer its best advantages during the first phase of the a crash. Instantly, the restraint means, such as a safety belt of the vehicle or any means arranged on the child seat, will load the chest of the child, but then the force will very soon be reduced as the thighs will push against the angled seat contour as previously described, thus decreasing the loads on the chest and the abdominal area.

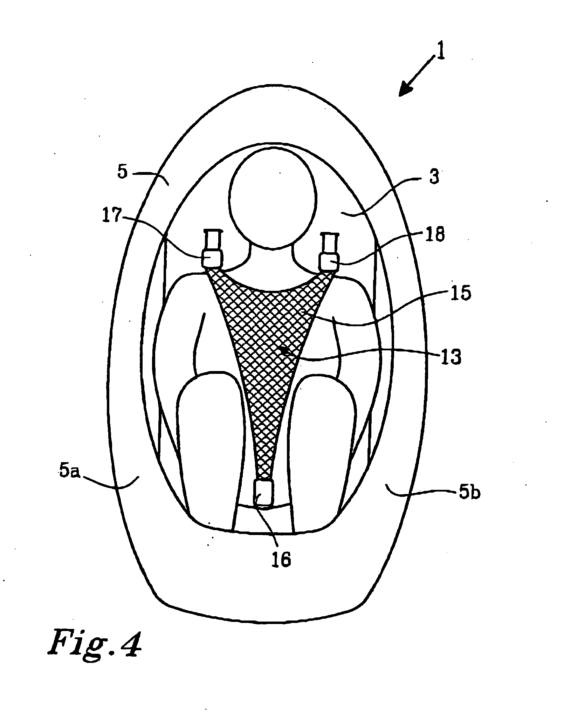

Figure 4 shows the child seat in a front view. The child seat preferably comprises a restraint means 13 for keeping the child in position in the child seat prior to or during a crash by which restraint means a substantially downwardly directed force on the child's pelvis is created. In use of the child seat according to the invention, such a restraint means is advantageously used for keeping the child's pelvis in as low a position as possible. With reference to figure 1, this means that it is desired that the child remains in the cup-shaped depression so as to enable the forces caused by a crash to be transferred between the thigh seat portion 2 on the one hand, and the thighs and the pelvis of the child on the other hand.

The restraint means 13 may have a single strap 15 for keeping the child in position relative to the child seat 1 prior to or during a crash is illustrated in figure 4. The strap 15 is a substantially triangle-shaped, preferably made by a flexible material such as a piece of woven fabric or similar, for covering a large part of the torso of the child and is provided with three corners 16, 17, 18. One first corner 16 is connectable to the thigh seat portion 2 in a position corresponding to a position between the legs, preferably in the crouch region, of a child occupying the child seat, and the remaining second 17 and third 18 corners are connectable to the backrest 3 in positions corresponding to positions in the vicinity of and preferably above each shoulder of a child occupying the child seat 1. Of course one ore more of the corners could be fixedly attached to the child seat, but for easy handling of the child seat, the strap 15 is suitably provided with connectable attaching means or locking means which may be attached and released relative to the child seat with a single manipulation. The locking means can preferably be used for making the upper corners 17, 18 of the strap 15 connectable to the backrest 3. Such a restraint means 13 having a substantially triangle-shaped single strap 15 as described above may also be used together with other types of child seat, i.e. together with a conventional child seat which is different from the child seat according to the invention.

It is to be understood that the present invention is not limited to the embodiments described above and illustrated in the drawings; rather, the skilled person will recognize that many changes and modifications may be made within the scope of the appended claims. For example the dimensions and the material of the components comprised in the child seat according to the invention may be varied in many ways.

The thigh seat portion to backrest angle α and the thigh seat portion angle β according to the invention means that the child seat has a depression for receiving a child therein which depression is defined by at least a first seat portion (thigh seat portion) for supporting the underside of the thighs of a child and for keeping the thighs and the pelvis of the child in position in the horizontal direction during a crash, and by at least a second seat portion (backrest) for supporting the back of the child. Furthermore, the buttocks of the child are supported in the lower part of the depression by a third seat portion formed by the first and second seat portions or by an additional seat portion connecting the first and second seat portions. The child seat is designed so that the first seat portion is arranged at a level above the third seat portion when the child seat is installed for use in a vehicle. The child seat is preferably designed to receive a child so as to position the pelvis of the child below the uppermost support area of the first seat portion. This means that the distance, in the vertical direction, from the third seat portion to the uppermost support area of the first seat portion should be chosen to exceed the corresponding distance from the third seat portion to the pelvis of the child when occupying the seat.

## Claims

1. A child seat (1) for a vehicle, comprising a seat portion (2) for supporting the thighs of an occupant of the seat and a backrest (3) for supporting the back of the occupant, wherein the main extension direction (21) of the main support surface (6) of the thigh seat portion (2) and a horizontal geometrical line (9) form a thigh seat portion angle (β) which is in the interval 30 to 70° when the child seat is installed for use in a vehicle, **characterized in that** a main extension direction (21) of a main support surface (6) of the thigh seat portion (2) and a main extension direction (22) of a main support surface (7) of the backrest (3) form a thigh seat portion to backrest angle (α) which is in the interval 40 to 80°.

2. A child seat according to claim 1, **characterized in that** the thigh seat portion to backrest angle (α) is in the interval 50 to 70°.

3. A child seat according to claim 2, **characterized in that** the thigh seat portion to backrest angle (α) is approximately 60°.

4. A child seat according to any preceding claim, **characterized in that** the thigh seat portion angle (β) is in the interval 40 to 60°.

5. A child seat according to claim 4, **characterized in that** the thigh seat portion angle (β) is approximately 50°.

6. A child seat according to any preceding claim, **characterized in that** the child seat comprises an additional seat portion (11) for supporting the buttocks of an occupant which additional seat portion has a main support surface (12) with a main extension direction (23) different from the main extension directions (21, 22) of the main surfaces (6, 7) of the thigh seat portion (2) and the backrest (3), and which additional seat portion (11) is arranged between the thigh seat portion (2) and the backrest (3) connecting the thigh seat portion and the backrest to each other.

7. A child seat according to claim 6, **characterized in that** the main extension direction (23) of said main support surface (12) of the additional seat portion (11) is substantially horizontal when the child seat is installed for use in a vehicle.

8. A child seat according to claim 6 or 7, **characterized in that** the additional seat portion (11) has a length (L) in the intended direction of travel (8) in the interval 5 to 20 cm.

9. A child seat according to claim 8, **characterized in that** the additional seat portion length (L) is in the interval 10 to 15 cm.

10. A child seat according to claim 9, **characterized in that** the additional seat portion length (L) is approximately 12 cm.

11. A child seat according to any of claims 6-10, **characterized in that** the additional seat portion (11) has a concave arc-shaped support surface (12).

12. A child seat according to any of claims 6-11, **characterized in that** the thigh seat portion (2), the backrest (3) and the additional seat portion (11) form a cup-shaped depression (20) for receiving a child.

13. A child seat according to any preceding claim, **characterized in that** the child seat has a depression (20) for receiving a child so as to position the pelvis of the child below the uppermost support area (30) of the thigh seat portion (2).

14. A child seat according to claim 12 or 13, **characterized in that** the child seat (1) comprises a restraint means (13) for keeping a child in the depression (20) prior to or during a crash by a substantially downwardly directed vertical force on the child's pelvis.

15. A child seat according to any preceding claim, **characterized in that** the child seat (1) comprises a restraint means (13) having a single strap (15) for keeping a child in position in the child seat prior to or during a crash, the strap (15) being substantially triangle-shaped for covering a large part of the torso of the child and provided with three corners (16, 17, 18), one first corner (16) of which being connectable to the thigh seat portion (2) in a position corresponding to a position between the legs of a child occupying the child seat, and the remaining second (17) and third (18) corners being connectable to the backrest (3) in positions corresponding to positions in the vicinity of each shoulder of a child occupying the child seat (1).

## Patentansprüche

1. Kindersitz (1) für ein Fahrzeug, umfassend einen Sitzbereich (2) zum Stützen der Oberschenkel eines Insassen des Sitzes und eine Rückenlehne (3) zum Stützen des Rückens des Insassen, worin eine Haupterstreckungsrichtung (21) der Hauptstützfläche (6) des Schenkelsitzbereichs (2) und eine horizontale geometrische Linie (9) einen Schenkelsitzbereichswinkel (β) bilden, der im Bereich von 30 bis 70° liegt, wenn der Kindersitz zur Nutzung im Fahrzeug installiert ist, **dadurch gekennzeichnet, dass** die Haupterstreckungsrichtung (21) einer Hauptstützfläche (6) eines Schenkelsitzbereichs (2) und eine Haupterstreckungsrichtung (22) einer Hauptstützfläche (7) der Rückenlehne (3) einen Winkel (α) zwischen Schenkelsitzbereich und Rückenlehne bilden, der im Bereich von 40 bis 80° liegt.

2. Kindersitz nach Anspruch 1, **dadurch gekennzeichnet, dass** der Winkel (α) zwischen Schenkelsitzbereich und Rückenlehne im Bereich von 50 bis 70° liegt.

3. Kindersitz nach Anspruch 2, **dadurch gekennzeichnet, dass** der Winkel (α) zwischen Schenkelsitzbereich und Rückenlehne ca. 60° beträgt.

4. Kindersitz nach einem der vorhergehenden Ansprüchen, **dadurch gekennzeichnet, dass** der Schenkelsitzbereichswinkel (β) im Bereich von 40 bis 60° liegt.

5. Kindersitz nach Anspruch 4, **dadurch gekennzeichnet, dass** der Schenkelsitzbereichswinkel (□) ca. 50° beträgt.

6. Kindersitz nach einem der vorhergehenden Ansprüchen, **dadurch gekennzeichnet, dass** der Kindersitz einen zusätzlichen Sitzbereich (11) umfasst, um das Gesäß eines Insassen zu tragen, wobei der zusätzliche Sitzbereich eine Hauptstützfläche (12) mit einer Haupterstreckungsrichtung (23) hat, die sich von den Haupterstreckungsrichtungen (21, 22) der Hauptstützflächen (6, 7) des Schenkelsitzbereichs (2) und der Rückenlehne (3) unterscheidet, und wobei der zusätzliche Sitzbereich (11) zwischen dem Schenkelsitzbereich (2) und der Rückenlehne (3) angeordnet ist und den Schenkelsitzbereich mit der Rückenlehne verbindet.

7. Kindersitz nach Anspruch 6, **dadurch gekennzeichnet, dass** die Haupterstreckungsrichtung (23) der Hauptstützfläche (12) des zusätzlichen Sitzbereichs (11) im Wesentlichen horizontal ist, wenn der Kindersitz zur Nutzung in einem Fahrzeug installiert ist.

8. Kindersitz nach Anspruch 6 oder 7, **dadurch gekennzeichnet, dass** der zusätzliche Sitzbereich (11) eine Länge (L) in der vorgesehenen Fahrtrichtung (8) von 5 bis 20 cm aufweist.

9. Kindersitz nach Anspruch 8, **dadurch gekennzeichnet, dass** die Länge (L) des zusätzlichen Sitzbereichs im Bereich von 10 bis 15 cm liegt.

10. Kindersitz nach Anspruch 9, **dadurch gekennzeichnet, dass** die Länge (L) des zusätzlichen Sitzbereichs ca. 12 cm beträgt.

11. Kindersitz nach einem der Ansprüche 6 bis 10, **dadurch gekennzeichnet, dass** der zusätzliche Sitzbereich (11) eine konkave, bogenförmige Stützfläche (12) aufweist.

12. Kindersitz nach einem der Ansprüche 6 bis 11, **dadurch gekennzeichnet, dass** der Schenkelsitzbereich (2), die Rückenlehne (3) und der zusätzliche Sitzbereich (11) eine schalenförmige Senke (20) zur Aufnahme eines Kindes bilden.

13. Kindersitz nach einem der vorhergehenden Ansprüche, **dadurch gekennzeichnet, dass** der Kindersitz eine Senke (20) aufweist, um ein Kind so aufzunehmen, dass das Becken des Kindes unterhalb des höchsten Stützbereichs (30) des Schenkelsitzbereichs (2) positioniert wird.

14. Kindersitz nach einem der Ansprüche 12 oder 13, **dadurch gekennzeichnet, dass** der Kindersitz (1) ein Zurückhaltemittel (13) zum Halten eines Kindes in der Senke (20) vor oder während eines Aufpralls durch eine im Wesentlichen nach unten gerichtete, vertikale Kraft auf das Becken des Kindes umfasst.

15. Kindersitz nach einem der vorhergehenden Ansprüche, **dadurch gekennzeichnet, dass** der Kindersitz (1) ein Zurückhaltemittel (13) mit einem einzelnen Gurt (15) zum Halten eines Kindes vor oder während eines Aufpralls in Position im Kindersitz umfasst, wobei der Gurt (15) im Wesentlichen dreiecksförmig ist, um einen großen Teiles des Körpers des Kindes zu bedecken, und drei Ecken (16, 17, 18) aufweist, von denen eine erste Ecke (16) in einer Stelle am Schenkelsitzbereich (2) befestigbar ist, die der Stelle zwischen den Beinen eines Kindes, das im Kindersitz sitzt, entspricht, und die verbleibenden, zweite (17) und dritte (18), Ecken an der Rückenlehne (3) an Stellen verbindbar sind, die Stellen in der Nähe jeder Schulter eines den Kindersitz (1) belegenden Kindes entsprechen.

## Revendications

1. Siège-enfant (1) pour un véhicule, comprenant une portion d'assise (2) destinée à supporter les cuisses d'un occupant du siège, et un dossier (3) destiné à soutenir le dos de l'occupant, dans lequel la direction d'extension principale (21) de la surface de soutien principale (6) de la portion d'assise (2) des cuisses et une ligne géométrique horizontale (9) forment un angle (β) de portion d'assise des cuisses qui est compris dans la plage de 30 à 70° lorsque le siège enfant est installé dans un véhicule pour son utilisation, ***caractérisé en ce qu*'**une direction d'extension principale (21) d'une surface de soutien principale (6) de la portion d'assise (2) et une direction d'extension principale (22) d'une surface de soutien principale (7) du dossier (3) forment un angle (α) de la portion d'assise des cuisses avec le dossier qui est compris dans une plage de 40 à 80°.

2. Siège-enfant selon la revendication 1, ***caractérisé en ce que*** l'angle (α) formé par la portion d'assise des cuisses avec le dossier est compris dans une plage de 50 à 70°.

3. Siège-enfant selon la revendication 2, ***caractérisé en ce que*** l'angle (α) formé par la portion d'assise des cuisses avec le dossier est approximativement égal à 60°.

4. Siège-enfant selon l'une quelconque des revendications précédentes, ***caractérisé en ce que*** l'angle (β) de portion d'assise des cuisses est compris dans une plage de 40 à 60°.

5. Siège-enfant selon la revendication 4, ***caractérisé en ce que*** l'angle (β) de portion d'assise des cuisses est approximativement égal à 50°.

6. Siège-enfant selon l'une quelconque des revendications précédentes, ***caractérisé en ce que*** le siège-enfant comprend une portion d'assise supplémentaire (11) destinée à supporter les fesses d'un occupant, cette portion d'assise supplémentaire ayant une surface de support principale (12) avec une direction d'extension principale (23) différente des directions d'extension principales (21, 22) des surfaces principales (6, 7) de la portion d'assise (2) pour les cuisses et du dossier (3), et cette portion d'assise supplémentaire (11) étant située entre la portion d'assise (2) pour les cuisses et le dossier (3), reliant l'une à l'autre la portion d'assise pour les cuisses et le dossier.

7. Siège-enfant selon la revendication 6, ***caractérisé en ce que*** la direction d'extension principale (23) de ladite surface de support principale (12) de la portion d'assise supplémentaire (11) est sensiblement horizontale lorsque le siège-enfant est installé pour son utilisation dans un véhicule.

8. Siège-enfant selon la revendication 6 ou 7, ***caractérisé en ce que*** la portion d'assise supplémentaire (11) a une longueur (L) dans la direction de déplacement prévue (8) comprise dans une plage de 5 à 20 cm.

9. Siège-enfant selon la revendication 8, ***caractérisé en ce que*** la longueur (L) de la portion d'assise supplémentaire est comprise dans une plage de 10 à 15 cm.

10. Siège-enfant selon la revendication 9, ***caractérisé en ce que*** la longueur (L) de la portion d'assise supplémentaire est approximativement de 12 cm.

11. Siège-enfant selon l'une quelconque des revendications 6 à 10, ***caractérisé en ce que*** la portion d'assise supplémentaire (11) possède une surface (12) de support en forme d'arc de cercle concave.

12. Siège-enfant selon l'une quelconque des revendications 6 à 11, ***caractérisé en ce que*** la portion d'assise (2) pour les cuisses, le dossier (3) et la portion d'assise supplémentaire (11) forment une dépression en forme de coupe (20) destinée à recevoir un enfant.

13. Siège-enfant selon l'une quelconque des revendications précédentes, ***caractérisé en ce que*** le siège-enfant comporte une dépression (20) destinée à recevoir un enfant de manière à ce que le pelvis de l'enfant soit situé sous l'aire de support la plus élevée (30) de la portion d'assise (2) pour les cuisses.

14. Siège-enfant selon la revendication 12 ou 13, ***caractérisé en ce que*** le siège-enfant (1) comprend un moyen de harnais (13) destiné à maintenir un enfant dans la dépression (20) avant ou pendant une collision par application d'une force sensiblement verticale dirigée vers le bas exercée sur le pelvis de l'enfant.

15. Siège-enfant selon l'une quelconque des revendications précédentes, ***caractérisé en ce que*** le siège-enfant (1) comprenant un moyen de harnais (13) ayant une seule sangle (15) pour maintenir un enfant en position dans le siège enfant avant ou pendant une collision, la sangle (15) étant sensiblement triangulaire de manière à couvrir une large part du torse de l'enfant et possédant trois coins (16, 17, 18), un premier coin (16) étant fixable à la portion d'assise (2) pour les cuisses dans une position correspondant à une position située entre les jambes d'un enfant occupant le siège-enfant, et les deuxième (17) et troisième (18) coins restants étant fixables au dossier (3) dans des positions correspondant à des positions situées au voisinage de chaque épaule d'un enfant occupant le siège-enfant (1).
